# EUROPÄISCHE PATENTSCHRIFT

(11) **EP 1 661 863 B1**
(45) Veröffentlichungstag und Bekanntmachung des Hinweises auf die Patenterteilung: **07.03.2012**
(21) Anmeldenummer: 04028329.3
(22) Anmeldetag: 30.11.2004
(51) Int. Cl.: C02F 1/461, C02F 1/44, C02F 5/02

(54) **Verfahren und Vorrichtung zur Aufbereitung und/oder Reinigung von Fluiden mit Wasserhärte**
Method and device for treating and/or purifying of fluids containing water hardness
Procédé et dispositif de traitement et/ou de purification de fluide contenant de la dureté de l'eau

(43) Veröffentlichungstag der Anmeldung: 31.05.2006
(73) Patentinhaber: Grünbeck Wasseraufbereitung GmbH, 89420 Höchstädt/Donau (DE)
(72) Erfinder: Meinardus, Martin, 89231 Neu-Ulm (DE)
(74) Vertreter: Hofer, Dorothea

(56) Entgegenhaltungen:
- WO-A-03/020645
- DE-A1- 10 001 911
- PATENT ABSTRACTS OF JAPAN Bd. 1998, Nr. 04, 31. März 1998 (1998-03-31) & JP 09 323029 A (NITTO DENKO CORP), 16. Dezember 1997 (1997-12-16)
- PATENT ABSTRACTS OF JAPAN Bd. 2000, Nr. 20, 10. Juli 2001 (2001-07-10) & JP 2001 070989 A (EBARA CORP), 21. März 2001 (2001-03-21)
- PATENT ABSTRACTS OF JAPAN Bd. 1997, Nr. 07, 31. Juli 1997 (1997-07-31) & JP 09 057271 A (JAPAN ORGANO CO LTD), 4. März 1997 (1997-03-04)

## Beschreibung

Die Erfindung betrifft ein Verfahren und eine Vorrichtung zur Aufbereitung und/oder Reinigung von Fluiden, die eine Wasserhärte aufweisen, wobei Membran-Trenntechniken zum Einsatz kommen. Verfahren und Vorrichtung sind insbesondere geeignet zur Aufbereitung und/oder Reinigung von härtehaltigen Wässern, wobei eine Belagsbildung von Härtebildnern auf Membranen, insbesondere semipermeablen Membranen, deutlich verhindert oder verzögert wird. Mit der Erfindung kann einer Belagsbildung durch das sogenannte Scaling" bei Membranprozessen vorgebeugt oder entgegengewirkt werden.

Bei Aufbereitungen bzw. Reinigungen mit semipermeablen Membranen von Wässern, die Wasserhärtebildner enthalten, kommt es durch Überschreitung der Löslichkeitsprodukte von Calciumcarbonat oder anderen Erdalkalisalzen zu Ablagerungen bzw. Verkrustungen auf den Membranoberflächen. Bekannt ist dieses Phänomen unter dem Begriff Scaling" bzw. Membranscaling". Insbesondere das Scaling" von Calciumcarbonat auf Umkehrosmosemembranen ist ein anganhaltendes und oftmals schwer zu handhabendes Problem (DVGW-Technologiezentrum Wasser Lipp, P Erfahrungen mit Nanofiltration und Umkehrosmose", DVGW-Membrantage Kassel , Juni 2004; Optimization of the preliminary treatment in a desalination plant by reverse osmosis" Desalination 156 (2003) 69-78; R. Sheikholeslami Assessment of the scaling potential for sparingly soluble salts in RO and NF units", Proceedings Euromed 167 (2004) 247-256).

Die entsprechenden Leistungsabfälle bzw. kürzeren Standzeiten von Membranen treiben Investitionskosten (z.B. wegen Membranaustausch) bzw. Betriebskosten (u.A. durch Membranspülungen) in die Höhe. Zur Vermeidung von Scaling" auf Membranoberflächen sind bisher Stand der Technik:
Erstens der Einsatz kristallisationsinhibierender chemischer Zusätze wie bspw. synthetischen Polymeren, Polyphosphaten, Polyasparginsäure (oben genannte Literatur sowie: Scale Inhibitors: Applications, Developments and Trends" Julia E. Nemeth, Robert W. Zuhl, Brad Jordan, Gilbert Galitart Harn R/O Systems, Inc (2002); Boffardi, Bennett P., "Scale and Deposit Control for Reverse Osmosis Systems", AWWA Membrane Technology Conference Proceedings, New Orleans, LA: AWWA, February 23-26, 1997, p 681485; und Prof. Dr. R. Kümmel, Dipl.-Ing. J. Robert und Dr.-Ing. A. Hoffmann, Fraunhofer-Institut für Umwelt-, Sicherheits- und Energietechnik UMSICHT, Untersuchungen zur Stofftrennung in Verfahrenskombinationen aus Membrantrennstufe und Kristallisation", Bericht AiF-FV-Nr.: 11472 (1999). Zweitens die Zugabe einer Säure oder Kohlendioxid, um das Kalk-Kohlensäure-Gleichgewicht zu verschieben (s. obige Literatur von Lipp, P in DVGW-Technologiezentrum Wasser. Drittens die Enthärtung des Rohwassers bis auf geringe Resthärten, um die Ausfällung von Härtebildnern prinzipiell zu vermeiden.
   Die JP-A-09 323029 beschreibt eine Entsalzung von Rohwasser durch Metallhydroxidfällung und Filtrierung, bevor entsalztes Wasser einer Trennmembran zugeführt wird, um ein "Scaling" auf der Membran zu vermeiden. In den Druckschriften JP-A-2001 070989 und JP-A-09 057271 ist einer RO-Membrananlage ein elektrolytischer Entsalzer nachgeschaltet. Entsalztes Wasser kann in einer Zyklisierung dem Zulauf zum RO-Membrananlage zugeleitet werden.
   Viertens die sog. Seedingtechnik (s. obige_Literatur R. Kümmel et al. in UMSICHT; Juby,G, und Schutte,C.F "Membrane Life in an seeded slurry reverse osmosis system", Water SA /South Africa Vol 26 (2) April 2000; US Patent 4,618,429 (1986)). Hierbei werden arteigene oder artähnliche Kristalle zum Abbau der Übersättigung des Konzentrats (bzw. Retentats) extern zugegeben. Eine spezielle Dosiervorlage oder ein Kristaller sind notwendig, um eine kontinuierliche und gleichmäßige Zugabe zu gewährleisten.

Die Aufgabe der Erfindung bestand darin, ein Verfahren bzw. eine Vorrichtung, bei dem bzw. der eine Membran zum Einsatz kommt, zur Aufbereitung und/oder Reinigung von Wasserhärte aufweisenden Fluiden so bereitzustellen, dass dem Scaling" beim Membranprozeß wirksam vorgebeugt oder entgegengewirkt wird.

Die Aufgabe wird durch das Verfahren gemäß Anspruch 1 bzw. durch die Vorrichtung gemäß Anspruch 11 gelöst. Bevorzugte Ausführungsformen des erfindungsgemäßen Verfahrens bzw. der erfindungsgemäßen Vorrichtung sind in den Unteransprüchen zu Anspruch 1 bzw. 11 angegeben.

Elektrochemische Verfahren bzw. Vorrichtungen zur Bildung von Kristallen aus Erdalkalisalzen, und deren nachfolgende Nutzung als Kalkschutz sind aus Warmwassersystemen bekannt (z.B. DE 195 02 588, DE 100 01 911 A1 und EP-A-1 388 595). Die elektrische Behandlung bewirkt eine lokale Erhöhung der Carbonathärte an der negativ geschalteten Elektrode (Kathode). Dort bilden sich Kalkkristalle, die dann als optisch nicht wahrnehmbare Impfkristalle mit dem durchfließenden Wasser ausgeschwemmt werden. In nachgeschalteten Trinkwassersystemen setzen sich weitere Kalkablagerungen bevorzugt auf diesen Impfkristallen und weniger auf der Oberfläche von Heizwendeln oder in den Rohren ab. Eine Anwendung elektrochemischer Verfahren bzw. Vorrichtungen für Membransysteme wurden bisher nicht in Betracht gezogen. Als technische Hindernisse zur Verhinderung der Belagsbildung durch Scaling" in Membranprozessen kommen grundsätzlich u.A. folgende Punkte in Betracht:
- Eine üblicherweise unzureichende Stabilität bzw. das ungenügende Wachstum elektrochemisch gebildeter Kristallkeime zum Kalkschutz im Kaltwasser (B. Kunz und W. Stumm "Kinetik der Bildung und des Wachstums von Calciumcarbonat", Vom Wasser, 62. Band (1984) 279-293; G. Walder und K. Leiter Schutz vor Kalk durch Impfkristalle"aus Alternative Trinkwasserversorgung", Schrift der FH Erfurt, Heft 3 (2000)), im Unterschied zu Warmwassersystemen.
- Eine potentielle Chlorgasbildung bei elektrolytischen Verfahren. Schon bei geringen Konzentrationen von Chlor im Wasser sinken bei üblichen Membranwerkstoffen wie zum Beispiel Polyamid die entsprechenden Membranleistungen drastisch ab (s. eingangs erwähnte Literatur Desalination 48 (1983) 1-16).
- Eine bei elektrochemischen Verfahren mit härtehaltigen Wässern mögliche Kalkbelegung auf der Kathode, welche den elektrischen Widerstand in die Höhe treibt. Kritische Spannungen werden schnell erreicht, bei denen sowohl Elektroden- wie Membranwerkstoffe durch Oxidantien beschädigt werden können.
Überraschend kann nun mit der Erfindung eine Belagsbildung (Scaling) auf Membranen verhindert bzw. verzögert werden, wenn der eigentlichen Membrantrennung bzw. der Anwendung der Membranprozessvorrichtung eine elektrochemische Behandlung vorgeschaltet wird. Es wird angenommen, dass die elektrochemische Vorbehandlung des härtehaltigen Fluids, selbst bei Kaltwasser, zu einer solchen Erdalkalicarbonatkeimbildung führt, dass das Fluid, wenn es anschließend an die Membran strömt, die Membran vor Belagsbildung schützt. Eine mit Erdalkalicarbonat übersättigte Lösung liegt vor, wenn der Sättigungsindex (SI) > 0 ist. Die Schutzwirkung ist besonders gut, wenn die elektrochemische Behandlung dann angewandt wird, wenn das Wasserhärte aufweisende Fluid eine mit Erdalkalicarbonat übersättigte Lösung einen SI von ≥ 0,2, vorzugsweise einen SI von ≥ 0,5, aufweist.

Überraschenderweise ist erfindungsgemäß kein hoher Abbau der Übersättigung der gelösten Erdalkalisalzkonzentrationen notwendig, im Gegensatz zur herkömmlichen Seedingtechnik. Betriebskosten und Wartungsaufwand können je nach Rohwassereigenschaften zugleich außerdem vorteilhafter gegenüber den gängigen Verfahren Ionentausch oder Antiscalantzugabe verringert werden. Auch umwelttechnisch ist das erfindungsgemäße Verfahren von Vorteil; der Zusatz von Salz (Ionentausch), Kohlendioxid oder anderen Dosiermitteln zum Antiscaling wird gänzlich vermieden. Das Elektrodenmaterial der elektrochemischen Vorrichtung kann nach Gebrauch recycelt oder ggf. nach einer sauren Spülung für einen Membranprozess wiederverwendet werden.

Durch die Erfindung kann ein über lange Zeit scalingfreier oder im wesentlichen scalingfreier Betrieb von Membrananlagen erreicht werden, ohne eine Zugabe von Chemikalien, einer Säure oder Kohlendioxid.

Die in den Unteransprüchen festgelegten Weiterbildungen des erfindungsgemäßen Verfahrens und der erfindungsgemäßen Vorrichtung tragen jeweils zur besonders wirksamen Beseitigung von oben genannten technischen Hindernissen bei.

Nachfolgend wird das Prinzip der Erfindung und ihre nicht einschränkenden, bevorzugten Ausführungsformen unter Bezugnahme auf die beigefügten Zeichnungen näher erläutert, wobei:
- Fig. 1: zeigt ein Verfahren und eine Vorrichtung gemäß einer bevorzugten Ausführungsform der Erfindung, mit einer Membranprozessvorrichtung mit einem oder mehreren (1...n) Einzelmodulen, und mit einem oder mehreren Einbauorten A bis D der Vorrichtung zur elektrochemischen Behandlung des Rohfluidzulaufs und/oder des Konzentratkreislaufs;
- Fig. 2: zeigt ein Diagramm mit gemessenen freien Chlorkonzentrationen im Abfluss der elektrochemischen Behandlung eines Wassers;
- Fig. 3: zeigt schematisch einen Vergleich einer strukturierten, porösen Elektrodenoberfläche (Fig. 3A) gegenüber einer glatten Elektrode (Fig. 3B) zur Verwendung in einer Vorrichtung zur elektrochemischen Behandlung des Wasserhärte aufweisenden Fluids, die bevorzugt in dem Verfahren oder der Vorrichtung gemäß der vorliegenden Erfindung zum Einsatz kommen kann;
- Fig. 4: zeigt schematisch den Ausschnitt der Anordnung eines Elektrodenpaars einer Vorrichtung zur elektrochemischen Behandlung, die im Verfahren oder der Vorrichtung gemäß der vorliegenden Erfindung zum Einsatz kommen kann; und
- Fig. 5: zeigt die Wirkung des erfindungsgemäßen Verfahrens und der erfindungsgemäßen Vorrichtung auf den Schlüsselfaktor Permeatleitfähigkeit und die damit verbundene Laufzeit eines Membranprozesses beispielhaft gemäß der fünften bevorzugten Ausführungsform der Erfindung.

Das Wasserhärte aufweisende Fluid enthält Wasser oder eine Wasser-haltige Flüssigkeit sowie typische Härtebildner wie Erdalkaliionen, speziell Ca²⁺- und Mg²⁺-Ionen. Je härter das Wasser oder das Wasser enthaltende Fluid, desto wirksamer ist die vorliegende Erfindung, so dass das erfindungsgemäße Verfahren und die erfindungsgemäße Vorrichtung vorzugsweise bei harten Wässern (14-21 Grad deutsche Härte, entsprechend 2,5 bis 3,8 mmol/l Erdalkaliionen), weiter bevorzugt bei sehr harten Wässern (> 21 Grad deutsche Härte, entsprechend > 3,8 mmol/l Erdalkaliionen) in Betrieb gesetzt wird. Als bedeutender Parameter zur Inbetriebnahme des erfindungsgemäßen Verfahrens und der erfindungsgemäßen Vorrichtung hat sich insbesondere der Sättigungsindex (SI) von Calciumcarbonat erwiesen, wobei der Sättigungsindex SI definiert ist (s. DIN 38404-10 (1995)) als der Logarithmus des Quotienten aus dem Produkt der Calcium- und der Carbonat-Ionenaktivitäten und dem Löslichkeitsprodukt von Calcit unter den herrschenden thermodynamischen Gegebenheiten. Der erfindungsgemäße Betrieb ist dann besonders wirksam, wenn das Wasserhärte aufweisende Fluid im Zustand einer relativ starken Übersättigung (SI ≥ 0,2, bevorzugt SI ≥ 0,5 oder sogar ≥ 0,75) vorliegt.

Daher kann die Vorrichtung zur elektrochemischen Behandlung in den Konzentratkreislauf des Membranprozesssystems eingebaut werden, da dort üblicherweise hohe Übersättigungen von z.B. SI ≥ 0,5 herrschen. Der Einbau dieser Vorrichtung in den Rohfluidzulauf ist besonders sinnvoll, wenn im Membranprozesssystem keine Konzentrat-Rückführung vorgesehen ist und/oder wenn das Rohfluid bereits eine ensprechende Härte bzw. einen entsprechenden SI aufweist.

Zur elektrochemischen Behandlung des die Membran anströmenden Fluids wird vorzugsweise ein Gleichstrom angelegt. Die maximale Vorspannung des zugeführten Gleichstroms liegt vorzugsweise unterhalb des Spannungswertes, ab der eine Chlorgasbildung oder die elektrochemische Bildung anderer Oxidantien stattfindet, die beim anschließenden Kontakt mit der Membran membranschädigend wären. Die maximale Vorspannung liegt daher vorzugsweise maximal bei E₀ von Chlor (1,36 V), ggf. plus einer akzeptablen Überspannung von z.B. 0,5-1,5 V, d.h. vorzugsweise bis maximal 3,0 V und weiter bevorzugt bis maximal 2,5 V, z.B. in einem Bereich von etwa 0,5 bis etwa 3,0 V. Auch der Bildung anderer, membranschädigender Oxidantien wird durch eine Fahrweise bei geringen Spannungen und Stromstärken vorgebeugt.

Die elektrochemische Behandlung kann fortlaufend oder intermittierend, mit oder ohne Polaritätswechsel von Gleichstrom durchgeführt werden. Die Durchführung auf intermittierende Weise und/oder mit Polaritätswechseln haben die Vorteile, eine geringere oder gleichmäßigere elektrische Beanspruchung der Elektroden, eine Verlangsamung der Kalkschichtbildung auf der Elektrodenoberfläche durch anodische Carbonatlösung, sowie eine bessere Abstimmung auf eine geeignete Kristallgrößenverteilung zu ermöglichen.

Um eine optimale Steuerung von stabilen oder genügend wachsenden, elektrochemisch gebildeten Kristallkeimen zu ermöglichen, erfolgt bei der Vorrichtung zur elektrochemischen Behandlung eine Anpassung der mindestens einer der Parameter, ausgewählt aus Stromstärke, max. Vorspannung, Häufigkeit und/oder Periode der Polaritätswechsel bezüglich der Elektroden. Die Anpassung dieser Parameter kann voreingestellt sein oder fortlaufend automatisch erfolgen. Diese Parameter werden vorteilhafterweise in Abhängigkeit von einem oder mehreren der folgenden Parameter angepasst bzw. eingestellt: Eigenschaft(en) der Membran, Rohfluidzusammensetzung, Konzentratzusammensetzung, Ausbeute des Membranprozesses, Durchfluß der Konzentratrückführung bzw. des Konzentratkreislaufs, Permeatleitfähigkeit und Permeatdurchfluß. Die gezielte Beeinflussung der Parameter Stromstärke, Spannung und Polaritätswechseln des elektrochemischen Verfahrens ermöglicht insbesondere eine vorteilhafte Anpassung an die jeweils vorliegenden Eigenschaften des aufzubereitenden bzw. zu reinigenden Fluids wie eines Wassers, um ein Membranscaling" langfristig zu vermeiden.

Die elektrochemische Behandlungseinheit umfasst vorzugsweise mindestens eine strukturierte und/oder Poren aufweisende Elektrode, um die Kontaktfläche der Elektroden mit dem Fluid zu erhöhen. Hierzu kann (können) die Elektrode(n) zum Beispiel eine Filz-, Faserflies-, Papier- oder Textilstruktur aufweisen und/oder in Form einer Wickelelektrode ausgestaltet sein. Ein geeignetes Grundmaterial für die Elektrode ist Metall, eine Metalllegierung und/oder insbesondere ein Kohlenstoffmaterial allein oder in Kombination.

Es ist von Vorteil, die Elektroden von Zeit zu Zeit zu behandeln, z.B. zu ihrer Regenerierung unter Entfernung von Erdalkalisalzen auf deren Oberflächen. Zu diesem Zweck können vom Membranprozessbetrieb unabhängige, gesonderte Behandlungsphasen, vorzugsweise mit Polaritätswechseln an der(den) Elektroden und/oder mit Spülung(en) der Elektrode(n), stattfinden. Dabei sind gegenüber dem normalen Membranprozessbetrieb gesonderte, geänderte Einstellungen der elektrochemischen Vorrichtung angebracht. Durch die vorteilhafte elektrischen Betriebsweise mit Polaritätswechseln wird der Anstieg des elektrischen Widerstands durch die Kalkbelegung der Elektroden außerordentlich verzögert. Kritische Spannungen und die damit verbundene Oxidantienbildung werden somit vermieden. Elektroden- wie Membranwerkstoffe werden somit nicht mehr beschädigt. Die ferner mögliche Entfernung von Erdalkalisalzen durch Spülungen können mit sauren Spülungen, zweckmäßigerweise mit kohlensäurehaltigem Permeat realisiert werden.

Eine weitere Verbesserung wird dadurch erhalten, dass zusätzlich zu der Membranprozeßvorrichtung und der Vorrich-tung(en) zur elektrochemischen Behandlung ferner eine Trennvorrichtung auf der Basis einer physikalischen oder mechanischen Trenntechnik eingerichtet ist. Geeignet sind hierzu eine Filtration, ein Hydrozyklon oder eine andere Verfahrenstechnik, speziell zur Abtrennung von bei der elektrochemischen Behandlung gebildeten Erdalkalisalzkristallen. Im Anschluss an die elektrochemische Behandlung des die Wasserhärte aufweisenden Fluids wird das Fluid der Membran zugeführt und strömt an die Membran, um dort in Konzentrat und Permeat getrennt zu werden. Um die Effektivität zu erhöhen, wird das Konzentrat vorzugsweise in einem Kreislauf zurückgeführt, wird ggf. mit frisch zugeleitetem Rohfluid vereinigt, und strömt die Membran erneut an.

Als Membranprozess bzw. Membranprozessvorrichtung kommen alle herkömmlichen Systeme in Betracht, bei denen Fluide, vor allem Flüssigkeiten, einem Trennschritt an einer oder an mehreren Membran(en) unterworfen werden. Beispiele möglicher Membranprozesse sind Umkehrosmose, Dia- oder Ultrafiltration, Salzlake- bzw. Salzlösungs-Konzentration, Entsalzung, Elektrodialyse und dergleichen, sind jedoch nicht darauf beschränkt. Im Fall der Elektrodialyse wird, zusätzlich an das Anlegen einer Spannung an die Membran zur Unterstützung der Dialysetrennung, eine elektrische Spannung auf das die Membran anströmende Fluid zur elektrochemischen Vorbehandlung des Fluids angelegt. Als Membran kann irgendeine in den vorstehend genannten Membranprozessen üblicherweise verwendete Membran verwendet werden, insbesondere vom Typ einer semipermeablen Membran. Typische Materialbeispiele für solche Membrane sind Polyamide und deren Derivate, Cellulosederivate wie Celluloseacetat, Polyvinylchlorid, Polysulfone, halogenierte Kohlenwasserstoffe wie Teflon, und andere geeignete Materialien.

### Erste Ausführungsform

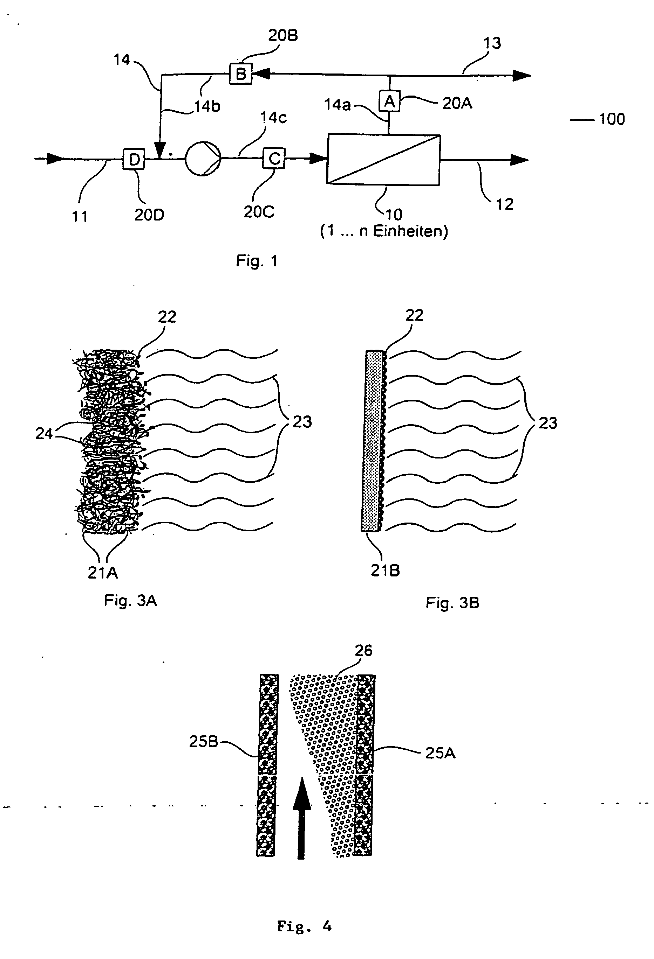

Fig. 1 zeigt ein Membranprozesssystem 100 mit einer herkömmlichen Membranprozessvorrichtung 10 für ein Rohwasser, welches Härtebildner enthält, wobei diese Membranprozessvorrichtung 10 aus mehreren Einzelmodulen (1...n), die beispielsweise in Reihe und/oder auch parallel geschalten sind, bestehen kann. Das Membranprozesssystem 100 umfasst als Leitungen: Leitung 11 für den Rohwasserzulauf, Leitung 12 für den Permeatabfluss, Leitung 13 für den Konzentratabfluss, und Leitung 14 mit den einzelnen Abschnitten 14a, 14b und 14c für den Konzentratrückführungskreislauf. Das Membranprozesssystem 100 umfasst ferner, getrennt von der Membranvorrichtung (10), ein oder mehrere Vorrichtungen zur elektrochemischen Behandlung 20A, 20B, 20C und/oder 20D. Da sich für einen besonders wirksamen Membranschutz wässrige Lösungen eignen, bei denen eine hohe Übersättigung an Härtebildnern wie Erdalkalisalzen (z.B. oberhalb Sättigungsindex SI ≥ 0,5) vorliegt, kann als vorteilhafte Einbauorte der elektrochemischen Behandlungsvorrichtung(en) eine oder mehrere Stellen gewählt werden im Bereich eines Konzentratkreislaufes des Membranprozesses, wie sie in Fig. 1 bei den Stellen A, B und C gezeigt sind. Ein ggf. alleiniger oder zusätzlicher Einbau im Bereich des Rohwasserzulaufs ist beim Einbauort D gezeigt.

### Zweite Ausführungsform

Mit einem in der ersten Ausführungsform beschriebenen Membranprozesssystem mit einer in die Konzentratrückführung eingebauten elektrochemischen Behandlungsvorrichtung wurde eine Membrananlage mit unterschiedlicher Einstellung der Vorspannung des der elektrochemischen Behandlungsvorrichtung zugeführten Gleichstroms betrieben. Im Zulauf zum Membranprozesssystem wurde die Konzentration an freiem Chlor gemessen.

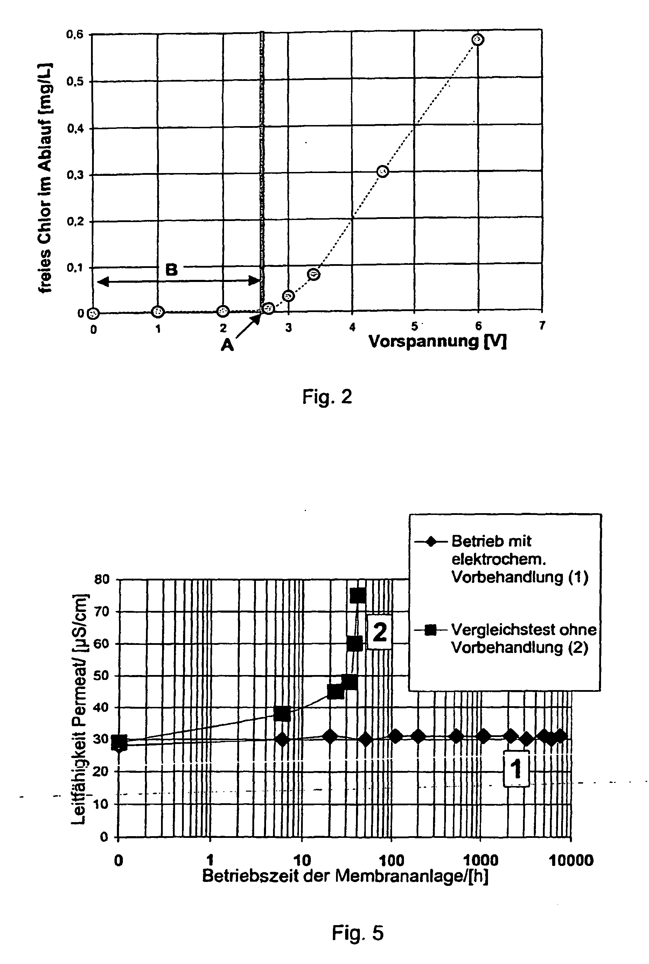

Fig. 2 zeigt, dass unterhalb einer bestimmten Spannung, die in diesem Beispiel mit dem Punkt A bezeichnet ist, kein freies Chlor messbar ist und somit keine Chlorgasbildung stattfindet. Bei chlorempfindlichen Membranen wird daher der Betrieb der elektrochemischen Behandlungsvorrichtung vorteilhaft bei Spannungen unterhalb dieser maximalen Vorspannung durchgeführt. In Fig. 2 ist dies mit dem Spannungsbereich B von 0 bis etwa 2,6 V angezeigt.

### Dritte Ausführungsform

In die Konzentratrückführung eines in der ersten Ausführungsform beschriebenen Membranprozesssystems wird gemäß der dritten Ausführungsform eine mit Gleichstrom betriebene elektrochemische Behandlungsvorrichtung eingebaut, die im einen Fall mit in Fig. 3A schematisch gezeigten, strukturierten, porösen und ggf. faserhaltigen Elektroden 21A, im anderen Fall mit in Fig. 3B schematisch gezeigten glatten Elektroden 21B ausgestattet ist. In beiden Fällen lagern sich kathodisch gebildete Erdalkalisalze 22 jeweils auf den Oberflächen der Elektrode an. Bei der Elektrodenoberfläche der Fig. 3A mit poröser, ggf. faserhaltiger Struktur liegt eine große Oberfläche im Inneren der Elektrode vor, so dass bei gleicher Erdalkalisalzmenge vorteilhaft noch offene Kontaktstellen zwischen dem Elektrodenmaterial- und dem wässrigen Medium 23 vorhanden sind, während im Fall von Fig. 3B zum Vergleich die glatte Elektrodenoberfläche schon vollständig belegt sein kann. Der elektrische Widerstand zwischen Elektrode und wässrigem Medium wird durch die Verblockung der Elektrodenoberfläche im Fall von Fig. 3B deutlich stärker als bei Fig. 3A verringert. Zudem kann bei der strukturierten Elektrode der Fig. 3A eine gewisser Tiefenfiltereffekt ausgenutzt werden, d.h. gröbere im System gebildete Kristallite werden teilweise in den Poren 24 zurückgehalten.

Dank des Vorsehens einer hochporösen, hochflächigen Elektrodenstruktur wie z.B. in Fig. 3A schematisch gezeigt, insbesondere in Verbindung mit einer vorteilhaften elektrischen Betriebsweise mit regelmäßigen Polaritätswechseln, wird der Anstieg des elektrischen Widerstands durch die Kalkbelegung der Elektroden außerordentlich verzögert. Kritische Spannungen und die damit verbundene Oxidantienbildung werden somit noch besser vermieden. Elektroden- wie Membranwerkstoffe werden somit nicht mehr beschädigt.

### Vierte Ausführungsform

In die Konzentratrückführung eines in der ersten Ausführungsform beschriebenen Membranprozesssystems wird gemäß der vierten Ausführungsform eine mit Gleichstrom betriebene elektrochemische Behandlungsvorrichtung eingebaut, deren Elektrodensystem ein Paar Wickelelektroden mit der in Fig. 4 schematisch gezeigten Anordnung aufweist. 25A stellt die Kathode und 25B die Anode dar. Die Strömung des Fluids durch die elektrochemische Behandlungsvorrichtung bzw. die Anordnung des Elektrodenpaars ist hier so eingerichtet, dass sich eine Strömung entlang der Längsrichtung der länglicher Elektrodenoberflächen, d.h. quer zu der Längsrichtung und parallel zu den Längsoberflächen der Wickelelektrode, erhalten wird, wie durch den Pfeil in Fig. 4 angedeutet. Dies ermöglicht die Ausspülung der an der Kathode 25A gebildeten Kristallite 26. Diese gelangen dank der Querströmung nicht in mehr in den Anodenbereich 25B, wo sie wieder aufgelöst werden könnten.

### Fünfte Ausführungsform

Mit einem inder ersten Ausführungsform beschriebenen Membranprozesssystem, das mit einer in die Konzentrat-rückführung eingebauten elektrochemischen Behandlungsvorrichtung ausgestattet war, wurde ein Dauerbetrieb einer Membrananlage mit folgenden Parametern durchgeführt:
Membranprozessvorrichtung:
   - Kontinuierlicher Betrieb mit einer automatisierten Umkehrosmose-Anlage,
   - Wickelmodul mit einer Polyamid-Membran
   - Durchsatz: 250 L/h Permeat
   - Permeat (Reinwasser) mit Leitfähigkeiten unterhalb 35 µS/cm.

Das zu behandelnde Fluid war Rohwasser, das 3,8 mmol/L Härtebildner enthielt, entsprechend 22°dH (deutsche Härte).

Vorrichtung zur elektrochemischen Behandlung:
- Einbau in die Konzentratrückführung
- Stromstärkeanpassung: 50-900 mA
- Spannung <2,5V
- Regelmäßige Umpolungen.

### Vergleich:

Zum Vergleich wurde das Rohwasser-Aufbereitungsverfahren mit den gleichen Parametern der Membranprozessvorrichtung, jedoch ohne Einbau der Vorrichtung zur elektrochemischen Behandlung durchgeführt.

### Ergebnis:

Im erfindungsgemäßen Betrieb der Rohwasseraufbereitung, d.h. mit der elektrochemischen Behandlungsvorrichtung wurden nach 1,5 Jahren Betrieb des Systems noch stabile Bedingungen und eine Permeat-Leitfähigkeit unterhalb von 35 µS/cm erreicht (s. Fig. 5, Kurve 1). Demgegenüber lag beim Vergleich ohne Vorbehandlung schon nach 24 Stunden die Permeatleitfähigkeit bei Werten oberhalb 35 µS/cm, bei weiterem Betrieb stieg diese stark an (Fig. 5, Kurve 2).

Die in den obigen Ausführungsformen jeweils beschriebenen Merkmale können modifiziert werden und beliebig miteinander kombiniert werden. Als Beispiel wurde die Aufarbeitung bzw. Reinigung von Rohwasser beschrieben, jedoch können selbstverständlich andere Fluide behandelt werden, die Wasserhärte aufweisen.

## Patentansprüche

1. Verfahren zur Aufbereitung und/oder Reinigung eines wasserhärteaufweisenden Fluids, mit einem Trennschritt an einer Membran, **dadurch gekennzeichnet, daß** mindestens ein Teil des wasserhärteaufweisenden Fluids, bevor es die Membran nachfolgend anströmt, mit Vorrichtung(en) zur elektrochemischen Behandlung elektrochemisch behandelt wird, wobei das wasserhärteaufweisende Fluid, das die Membran anströmt, eine mit Erdalkalicarbonat übersättigte Lösung ist, und wobei die elektrochemische Behandlung eine lokale Erhöhung der Carbonathärte an der Kathode der Vorrichtung(en) zur elektrochemischen Behandlung bewirkt, zur Bildung von Kristallen aus Erdalkalisalzen.

2. Verfahren gemäß Anspruch 1, **dadurch gekennzeichnet, daß** die mit Erdalkalicarbonat übersättigte Lösung einen Sättigungsindex (SI) von ≥ 0,2 aufweist.

3. Verfahren gemäß einem der vorangehenden Ansprüche, **dadurch gekennzeichnet, daß** die elektrochemische Behandlung im Bereich eines mit Erdalkalicarbonat übersättigten Konzentratkreislaufes (14), außerhalb der Membranprozessvorrichtung (10), durchgeführt wird,
oder daß das wasserhärteaufweisende Fluid gleichzeitig an zwei oder mehr Punkten des Rohfluidzulaufs (D) und/oder des Konzentratkreislaufes (A,B,C) des Membranprozesses der elektrochemischen Behandlung unterworfen wird,
oder daß zwei oder mehr Einheiten zur elektrochemischen Behandlung (20A, 20B, 20C, 20D), jeweils im Bereich des Rohfluidzulaufs und/oder des Konzentratkreislaufes des Membranprozesses, parallel geschaltet sind zur gleichzeitigen Operation bei Betrieb der elektrochemischen Behandlung.

4. Verfahren gemäß einem der vorangehenden Ansprüche, **dadurch gekennzeichnet, daß** zur elektrochemischen Behandlung ein Gleichstrom angelegt wird, vorzugsweise mit einer maximalen Vorspannung des zugeführten Gleichstromes unterhalb des Spannungswertes, ab der eine Chlorgasbildung stattfindet.

5. Verfahren gemäß einem der vorangehenden Ansprüche, **dadurch gekennzeichnet, daß** die elektrochemische Behandlung intermittierend durchgeführt wird,
und/oder dass zur elektrochemischen Behandlung Polaritätswechsel von Gleichstrom erfolgen.

6. Verfahren gemäß einem der vorangehenden Ansprüche, **dadurch gekennzeichnet, daß** für die elektrochemische Behandlung mindestens eine strukturierte und/oder Poren aufweisende Elektrode (21A) verwendet wird, wobei vorzugsweise die Elektrode(n) Kohlenstoffmaterial umfasst (umfassen) und/oder eine Filz-, Faserflies-, Papier- oder Textilstruktur aufweist (aufweisen).

7. Verfahren gemäß einem der vorangehenden Ansprüche, **dadurch gekennzeichnet, daß** eine Strömung des Fluids in der Vorrichtung zur elektrochemischen Behandlung (20A, 20B, 20C, 20D) entlang einer Längsrichtung länglicher Oberflächen von Elektroden (25A, 25B) erfolgt.

8. Verfahren gemäß einem der vorangehenden Ansprüche, **dadurch gekennzeichnet, daß** bei der Vorrichtung der elektrochemischen Behandlung (20A, 20B, 20C, 20D) zur Steuerung von stabilen oder genügend wachsenden, elektrochemisch gebildeten Kristallkeimen eine Anpassung mindestens einer der Parameter, ausgewählt aus Stromstärke, max. Vorspannung, Häufigkeit und/oder Periode der Polaritätswechsel vorgenommen wird, vorzugsweise in Abhängigkeit von einem oder mehreren der folgenden Parameter:
- Eigenschaft(en) der Membran,
- Rohfluidzusammensetzung,
- Konzentratzusammensetzung,
- Ausbeute des Membranprozesses,
- Durchfluß der Konzentratrückführung bzw. des Konzentratkreislaufs,
- Permeatleitfähigkeit und
- Permeatdurchfluß.

9. Verfahren gemäß einem der vorangehenden Ansprüche, **dadurch gekennzeichnet, dass**, zur Entfernung von Erdalkalisalzen auf Oberflächen von Elektroden der Vorrichtung(en) zur elektrochemischen Behandlung, vom Membranbetrieb unabhängige, gesonderte Behandlungsphasen, vorzugsweise mit Polaritätswechseln an der(den) Elektrode(n) und/oder mit Spülung(en) der Elektrode(n), durchgeführt werden.

10. Verfahren gemäß einem der vorangehenden Ansprüche, **dadurch gekennzeichnet, daß** zusätzlich zu der elektrochemischen Behandlung und dem Membranprozeß eine Abtrennung durch eine physikalische oder mechanische Trenntechnik durchgeführt wird.

11. Membranprozesssystem zur Aufbereitung und/oder Reinigung eines wasserhärteaufweisenden Fluids mithilfe von Membranen, mit:
- einer Membranprozessvorrichtung (10) zur Trennung von Konzentrat und Permeat, und
- mindestens einer Vorrichtung zur elektrochemischen Behandlung (20A, 20B, 20C, 20D) wenigstens eines Teils des wasserhärteaufweisenden Fluids, bevor es die Membran nachfolgend anströmen kann,
wobei die Vorrichtung(en) zur elektrochemischen Behandlung des wasserhärteaufweisenden Fluids (20A, 20B, 20C, 20D) in einem Membranaufbereitungs- oder Membranreinigungssystem (100) im Bereich des Rohfluidzulaufs (11) und/oder im Bereich eines Konzentratkreislaufes (14) des Membranprozesses, zusätzlich und außerhalb der Membranprozessvorrichtung (10), eingebaut ist (sind), wobei die elektrochemische Behandlung der Anwendung der Membranprozessvorrichtung vorgeschaltet ist und die elektrische Behandlung eine lokale Erhöhung der Carbonathärte an der Kathode der Vorrichtung(en) zur elektrochemischen Behandlung bewirkt, zur Bildung von Kristallen aus Erdalkalisalzen.

12. Membranprozesssystem gemäß Anspruch 11, **dadurch gekennzeichnet, daß** die Vorrichtung(en) zur elektrochemischen Behandlung steuerbar ist (sind), nur dann in Betrieb gesetzt zu sein, wenn die mit Erdalkalicarbonat übersättigte Lösung einen Sättigungsindex (SI) von ≥ 0,2 aufweist.

13. Membranprozesssystem gemäß Anspruch 11 oder 12, **dadurch gekennzeichnet,**
**daß** zwei oder mehr Einheiten zur elektrochemischen Behandlung des wasserhärteaufweisenden Fluids (20A, 20B, 20C, 20D), jeweils im Bereich des Rohfluidzulaufs (11) und/oder des Konzentratkreislaufes (14; 14a-c) des Membranprozesses, parallel geschaltet sind zur gleichzeitigen Operation beim Betrieb der elektrochemischen Behandlung.

14. Membranprozesssystem gemäß einem der Ansprüche 11 bis 13, **dadurch gekennzeichnet, daß** die Vorrichtung(en) zur elektrochemischen Behandlung (20A, 20B, 20C, 20D) zur Erzeugung von Gleichstrom eingerichtet sind, vorzugsweise mit einer maximalen Vorspannung des zugeführten Gleichstromes unterhalb des Spannungswertes, ab der eine Chlorgasbildung stattfindet.

15. Membranprozesssystem gemäß einem der Ansprüche 11 bis 14, **dadurch gekennzeichnet, daß** die Vorrichtung(en) zur elektrochemischen Behandlung (20A, 20B, 20C, 20D) darauf angepasst ist (sind), die elektrochemische Behandlung intermittierend durchzuführen,
und/oder dazu geeignet ist (sind), zur elektrochemischen Behandlung die Polarität von Gleichstrom zu wechseln.

16. Membranprozesssystem gemäß einem der Ansprüche 11 bis 15, **dadurch gekennzeichnet, daß** die Vorrichtung(en) zur elektrochemischen Behandlung (20A, 20B, 20C, 20D) mindestens eine strukturierte und/oder Poren aufweisende Elektrode aufweist (aufweisen), wobei vorzugsweise die Elektrode(n) ein Kohlenstoffmaterial umfasst (umfassen) und/oder eine Filz-, Faserflies-, Papier- oder Textilstruktur aufweist (aufweisen).

17. Membranprozesssystem gemäß einem der Ansprüche 11 bis 16, **dadurch gekennzeichnet, daß** die Vorrichtung(en) der elektrochemischen Behandlung (20A, 20B, 20C, 20D) hinsichtlich mindestens einem Parameter regelbar ist (sind), ausgewählt aus Stromstärke, max. Vorspannung, Häufigkeit und/oder Periode der Polaritätswechsel, wobei vorzugsweise die Regelung in Abhängigkeit von einem oder mehreren der folgenden Parameter erfolgen kann:
- Eigenschaft(en) der Membran,
- Rohfluidzusammensetzung,
- Konzentratzusammensetzung,
- Ausbeute des Membranprozesses,
- Durchfluß der Konzentratrückführung bzw. des Konzentratkreislaufs,
- Permeatleitfähigkeit und
- Permeatdurchfluß.

18. Membranprozesssystem gemäß einem der Ansprüche 11 bis 17, **dadurch gekennzeichnet, daß** zusätzlich zu der Membranprozeßvorrichtung (10) und der Vorrichtung(en) zur elektrochemischen Behandlung (20A, 20B, 20C, 20D) ferner eine Trennvorrichtung auf der Basis einer physikalischen oder mechanischen Trenntechnik eingerichtet ist.

## Claims

1. A method for treating and/or purifying a fluid having water hardness, comprising a separation step at a membrane, **characterised in that** at least a fraction of the fluid having water hardness, prior to the fluid subsequently flowing against the membrane, is electrochemically treated by device(s) for electrochemical treatment, wherein the fluid having water hardness which is flowing against the membrane is a solution supersaturated with alkaline earth carbonate, and wherein the electrochemical treatment causes a local increase of the carbonate hardness at the cathode of the device(s) for the electrochemical treatment, for the formation of crystals of alkaline earth salts.

2. The method according to claim 1, **characterised in that** the solution supersaturated with alkaline earth carbonate has a saturation index (SI) of ≥ 0.2.

3. The method according to one of the preceding claims, **characterised in that** the electrochemical treatment is performed in the section of a concentrate loop (14) supersaturated with alkaline earth carbonate, outside of the membrane process device (10), or that the fluid having water hardness is simultaneously subjected to the electrochemical treatment at two or more locations of the raw fluid feed (D) and/or the concentrate loop (A, B, C) of the membrane process, or that two or more units for the electrochemical treatment (20A, 20B, 20C, 20D), respectively in the section of the raw fluid feed and/or the concentrate loop of the membrane process, are connected in parallel for simultaneous operation while running the electrochemical treatment.

4. The method according to one of the preceding claims, **characterised in that** for the electrochemical treatment a direct current is applied, preferably with a maximum bias voltage of the applied direct current below the voltage threshold, above which formation of chlorine gas occurs.

5. The method according to one of the preceding claims, **characterised in that** the electrochemical treatment is performed intermittently, and/or that for the electrochemical treatment reversals of the direct current polarity occur.

6. The method according to one of the preceding claims, **characterised in that** for the electrochemical treatment at least one electrode being structured and/or having pores (21A) is used, wherein preferably the electrode(s) comprise(s) carbon material and/or has (have) a felt, non-woven, paper or textile fabric.

7. The method according to one of the preceding claims, **characterised in that** a flow of the fluid in the device for the electrochemical treatment (20A, 20B, 20C, 20D) occurs along a longitudinal direction of elongated surfaces of electrodes (25A, 25B).

8. The method according to one of the preceding claims, **characterised in that** at the device of the electrochemical treatment (20A, 20B, 20C, 20D) for the control of stable or sufficiently growing, electrochemically formed seed crystals an adjustment of at least one of the parameters, selected from current, maximum bias voltage, frequency and/or period of reversals of polarity, is performed, preferably dependent on one or more of the following parameters:
- property (properties) of the membrane,
- composition of the raw fluid,
- composition of the concentrate,
- yield of the membrane process,
- flow of the concentrate refeed and the concentrate loop respectively,
- permeate conductivity, and
- permeate flow.

9. The method according to one of the preceding claims, **characterised in that** for the removal of alkaline earth salts on surfaces of electrodes of the device(s) for the electrochemical treatment, separate treatment phases independent of the membrane operation are performed, preferably with reversals of polarity at the electrode(s) and/or with purging of the electrode(s).

10. The method according to one of the preceding claims, **characterised in that** in addition to the electrochemical treatment and the membrane process a separation by means of a physical or mechanical separation technique is performed.

11. A membrane process system for treating and/or purifying of a fluid having water hardness by means of membranes, comprising:
- a membrane process device (10) for the separation of concentrate and permeate, and
- at least one device for the electrochemical treatment (20A, 20B, 20C, 20D) of at least a fraction of the fluid having water hardness, prior to the fluid being able to subsequently flow against the membrane,
wherein the device(s) for the electrochemical treatment of the fluid having water hardness (20A, 20B, 20C, 20D) is (are) installed in a membrane treatment or membrane purification system (100) in the section of the raw fluid feed (11) and/or in the section of a concentrate loop (14) of the membrane process, in addition to and outside of the membrane process device (10), wherein the electrochemical treatment is placed upstream of the application of the membrane process device, and the electrical treatment causes a local increase of the carbonate hardness at the cathode of the device(s) for the electrochemical treatment, for the formation of crystals of alkaline earth salts.

12. The membrane process system according to claim 11, **characterised in that** the device(s) for the electrochemical treatment is (are) controllable to only being set in operation when the solution supersaturated with alkaline earth carbonate has a saturation index (SI) of ≥ 0.2.

13. The membrane process system according to claim 11 or 12, **characterised in that** two or more units for the electrochemical treatment of the fluid having water hardness (20A, 20B, 20C, 20D), respectively in the section of the raw fluid feed (11) and/or the concentrate loop (14; 14a-c) of the membrane process, are connected in parallel for simultaneous operation while running the electrochemical treatment.

14. The membrane process system according to one of the claims 11 to 13, **characterised in that** the device(s) for the electrochemical treatment (20A, 20B, 20C, 20D) is (are) equipped for the generation of direct current, preferably with a maximum bias voltage of the applied direct current below the voltage threshold, above which formation of chlorine gas occurs.

15. The membrane process system according to one of the claims 11 to 14, **characterised in that** the device(s) for the electrochemical treatment (20A, 20B, 20C, 20D) is (are) adapted to perform the electrochemical treatment intermittently and/or is (are) capable to reverse the polarity of direct current for the electrochemical treatment.

16. The membrane process system according to one of the claims 11 to 15, **characterised in that** the device(s) for the electrochemical treatment (20A, 20B, 20C, 20D) has (have) at least one electrode being structured and/or having pores, wherein preferably the electrode(s) comprise(s) a carbon material and/or has (have) a felt, non-woven, paper or textile fabric.

17. The membrane process system according to one of the claims 11 to 16, **characterised in that** the device(s) of the electrochemical treatment (20A, 20B, 20C, 20D) is (are) controllable with regard to at least one parameter, selected from current, maximum bias voltage, frequency and/or period of the reversals of polarity, wherein preferably control can occur dependent on one or more of the following parameters:
- property (properties) of the membrane,
- composition of the raw fluid,
- composition of the concentrate,
- yield of the membrane process,
- flow of the concentrate refeed and the concentrate loop respectively,
- permeate conductivity, and
- permeate flow.

18. The membrane process system according to one of the claims 11 to 17, **characterised in that**, in addition to the membrane process device (10) and the device(s) for the electrochemical treatment (20A, 20B, 20C, 20D), further a separation device based on a physical or mechanical separation technique is installed.

## Revendications

1. Procédé de traitement et/ou de purification d'un fluide présentant une dureté de l'eau, avec une étape de séparation sur une membrane, **caractérisé en ce qu'**au moins une partie du fluide présentant une dureté de l'eau, avant qu'il ne traverse par la suite la membrane, est traitée électrochimiquement avec un ou des dispositifs de traitement électrochimique, où le fluide présentant une dureté de l'eau et traversant la membrane est une solution sursaturée en carbonate d'alcalino-terreux et où le traitement électrochimique provoque une hausse locale de la dureté carbonatée sur la cathode du ou des dispositifs de traitement électrochimique, pour la formation de cristaux à partir de sels d'alcalino-terreux.

2. Procédé selon la revendication 1, **caractérisé en ce que** la solution sursaturée en carbonate d'alcalino-terreux présente un indice de saturation (IS) de ≥ 0,2.

3. Procédé selon l'une des revendications précédentes, **caractérisé en ce que** le traitement électrochimique est réalisé dans la zone d'une circulation de concentrat (14) sursaturé en carbonate d'alcalino-terreux, en dehors du dispositif de procédé membranaire (10), ou que le fluide présentant une dureté de l'eau est soumis au traitement électrochimique simultanément en deux points ou plus de l'amenée de fluide brut (D) et/ou de la circulation du concentrat (A, B, C) du procédé membranaire, ou que deux unités ou plus, destinées au traitement électrochimique (20A, 20B, 20C, 20D), sont montées en parallèle respectivement dans la zone de l'amenée du fluide brut et/ou de la circulation du concentrat du procédé membranaire, pour un fonctionnement simultané lorsque le traitement électrochimique est en service.

4. Procédé selon l'une des revendications précédentes, **caractérisé en ce qu'**un courant continu est appliqué pour le traitement électrochimique, de préférence avec une tension préalable maximale du courant continu amené qui se situe en dessous de la valeur de tension à partir de laquelle il se forme du chlore gazeux.

5. Procédé selon l'une des revendications précédentes, **caractérisé en ce que** le traitement électrochimique est réalisé de manière intermittente, et/ou **en ce que** des changements de polarité du courant continu se produisent pour le traitement électrochimique.

6. Procédé selon l'une des revendications précédentes, **caractérisé en ce que**, pour le traitement électrochimique, on utilise au moins une électrode (21A) structurée et/ou comportant des pores, où la ou les électrodes comprend ou comprennent de préférence une matière carbonée et/ou une structure en feutre, voile, papier ou textile.

7. Procédé selon l'une des revendications précédentes, **caractérisé en ce qu'**une circulation du fluide dans le dispositif de traitement électrochimique (20A, 20B, 20C, 20D) s'effectue dans un sens longitudinal des surfaces oblongues des électrodes (25A, 25B).

8. Procédé selon l'une des revendications précédentes, **caractérisé en ce que**, pour la mise en place du traitement électrochimique (20A, 20B, 20C, 20D), on effectue pour le contrôle des germes de cristaux stables ou de croissance suffisante, formés électrochimiquement, une adaptation d'au moins un des paramètres choisis parmi la puissance du courant électrique, la tension préalable maximale, la fréquence et/ou la période des changements de polarité, de préférence en fonction d'un ou de plusieurs des paramètres suivants :
- la ou les propriétés de la membrane,
- la composition du fluide brut,
- la composition du concentrat,
- le rendement du procédé membranaire,
- le débit de la recirculation du concentrat ou de la circulation du concentrat,
- la conductivité du perméat et
- le débit du perméat.

9. Procédé selon l'une des revendications précédentes, **caractérisé en ce que**, pour éliminer les sels d'alcalino-terreux à la surface des électrodes du ou des dispositifs de traitement électrochimique, on réalise des phases de traitement séparées, indépendantes du fonctionnement de la membrane, de préférence avec des changements de polarité au niveau de la ou des électrodes et/ou le rinçage ou les rinçages de l'électrode ou des électrodes.

10. Procédé selon l'une des revendications précédentes, **caractérisé en ce que**, en plus du traitement électrochimique et du procédé membranaire, on réalise une séparation par une technique de séparation physique ou mécanique.

11. Système de procédé membranaire pour le traitement et/ou la purification d'un fluide présentant une dureté de l'eau à l'aide de membranes, **caractérisé en ce qu'**il comprend :
- un dispositif de procédé membranaire (10) pour la séparation du concentrat et du perméat, et
- au moins un dispositif de traitement électrochimique (20A, 20B, 20C, 20D) d'au moins une partie du fluide présentant une dureté de l'eau, avant qu'il ne puisse par la suite traverser la membrane,
où le ou les dispositifs de traitement électrochimique (20A, 20B, 20C, 20D) d'au moins une partie du fluide présentant une dureté de l'eau est ou sont intégrés dans un système de traitement ou de purification à membranes (100) dans la zone de l'amenée du fluide brut (11) et/ou dans la zone d'une circulation du concentrat (14) du procédé membranaire, en plus et en dehors du dispositif de procédé membranaire (10), où le traitement électrochimique précède l'application du dispositif de procédé membranaire et le traitement électrique provoque une hausse locale de la dureté carbonatée sur la cathode du ou des dispositifs de traitement électrochimique, pour la formation de cristaux à partir de sels d'alcalino-terreux.

12. Système de procédé membranaire selon la revendication 11, **caractérisé en ce que** le ou les dispositifs de traitement électrochimique peut ou peuvent être commandés pour n'être alors mis en marche que si la solution sursaturée en carbonate d'alcalino-terreux présente un indice de saturation (SI) de ≥ 0,2.

13. Système de procédé membranaire selon la revendication 11 ou 12, **caractérisé en ce que** deux unités ou plus, destinées au traitement électrochimique (20A, 20B, 20C, 20D), sont montées en parallèle respectivement dans la zone de l'amenée du fluide brut (11) et/ou de la circulation du concentrat (14 ; 14a-c) du procédé membranaire, pour un fonctionnement simultané lorsque le traitement électrochimique est en service.

14. Système de procédé membranaire selon l'une des revendications 11 à 13, **caractérisé en ce que** le ou les dispositifs de traitement électrochimique (20A, 20B, 20C, 20D) sont conçus pour produire un courant continu, de préférence avec une tension préalable maximale du courant continu amené qui se situe en dessous de la valeur de tension à partir de laquelle il se forme du chlore gazeux.

15. Système de procédé membranaire selon l'une des revendications 11 à 14, **caractérisé en ce que** le ou les dispositifs de traitement électrochimique (20A, 20B, 20C, 20D) est ou sont adaptés pour réaliser le traitement électrochimique de manière intermittente, et/ou est ou sont appropriés à changer la polarité du courant continu pour le traitement électrochimique.

16. Système de procédé membranaire selon l'une des revendications 11 à 15, **caractérisé en ce que** le ou les dispositifs de traitement électrochimique (20A, 20B, 20C, 20D) comprend ou comprennent au moins une électrode structurée et/ou comportant des pores, où la ou les électrodes comprend ou comprennent de préférence une matière carbonée et/ou une structure en feutre, voile, papier ou textile.

17. Système de procédé membranaire selon l'une des revendications 11 à 16, **caractérisé en ce que** le ou les dispositifs de traitement électrochimique (20A, 20B, 20C, 20D) est ou sont réglables au niveau d'au moins un paramètre, choisi parmi la puissance du courant électrique, la tension préalable maximale, la fréquence et/ou la période des changements de polarité, le réglage pouvant s'effectuer de préférence en fonction d'un ou de plusieurs des paramètres suivants :
- la ou les propriétés de la membrane,
- la composition du fluide brut,
- la composition du concentrat,
- le rendement du procédé membranaire,
- le débit de la recirculation du concentrat ou de la circulation du concentrat,
- la conductivité du perméat et
- le débit du perméat.

18. Système de procédé membranaire selon l'une des revendications 11 à 17, **caractérisé en ce qu'**un dispositif de séparation à base d'une technique de séparation physique ou mécanique est également installé, en plus du dispositif de procédé membranaire (10) et du ou des dispositifs de traitement électrochimique (20A, 20B, 20C, 20D).
